# EUROPÄISCHE PATENTANMELDUNG

(11) **EP 1 591 463 A1**
(43) Veröffentlichungstag der Anmeldung: **02.11.2005**
(21) Anmeldenummer: 05008115.7
(22) Anmeldetag: 14.04.2005
(51) Int. Cl.: C08F 212/08, C08F 212/36

(54) **Verfahren zur Herstellung von Siliziumdioxidhaltigen Perlpolymerisaten**

(30) Priorität: 30.04.2004 DE 102004021738
(71) Anmelder: LANXESS Deutschland GmbH, 51369 Leverkusen (DE)
(72) Erfinder: Podszun, Wolfgang, Dr., 51061 Köln (DE); Klipper, Reinhold, Dr., 50933 Köln (DE); Wagner, Rudolf, Dr., 51061 Köln (DE)

(57) **Zusammenfassung**

Die vorliegende Erfindung betrifft ein Verfahren zur Herstellung siliziumdioxidhaltiger Perlpolymerisate durch Erzeugen eines Gemisches aus Styrol, Vernetzer, feinteiligem oberflächenmodifiziertem Siliziumdioxid, Radikalstarter und gegebenenfalls Inertmittel und Aushärten des erhaltenen Gemisches in wässriger Phase bei erhöhter Temperatur zu einem Perlpolymerisat, die siliziumdioxidhaltigen Perlpolymerisate selber sowie deren Verwendungen.

## Beschreibung

Die vorliegende Erfindung betrifft ein Verfahren zur Herstellung von siliziumdioxidhaltigen Perlpolymerisaten auf Basis von vernetztem Polystyrol.

Perlpolymerisate aus vernetztem Polystyrol werden in vielfältiger Weise zur Herstellung von Ionenaustauschern, Katalysatoren, Adsorbern und Chromatographieharzen eingesetzt. Die Teilchengrösse üblicher Perlpolymerisate liegt dabei in einem Bereich von 50 -500 µm.

Bei vielen Anwendungen werden säulenförmige mit den Perlpolymerisaten gefüllte Filter mit Flüssigkeiten durchströmt. Es hat sich nun gezeigt, dass die bisher eingesetzten Perlpolymerisate nicht immer die gewünschte mechanische Festigkeit aufweisen, was zu einer Deformation oder gar zu einem Zerbrechen der Perlen unter Belastung führen kann. Sowohl die Deformation als auch der Bruch verursachen einen unerwünschten Anstieg des Druckverlustes im Filter. Diese Limitierung schränkt die technische Anwendung ein und bringt ökonomische Nachteile.

Die mechanische Verstärkung von Perlpolymerisaten aus Acrylatpolymer mit Siliziumdioxid als Füllstoff ist aus der EP-A 0 084 769 bekannt. Die dort beschriebenen Perlpolymerisate eignen sich besonders als Komponenten von Dentalmaterialien.

Die EP-A 0 545 168 beschreibt optisch aktive Perlpolymerisate mit einem Anteil von 2 bis 60 Gew.% anorganischem Füllstoff, die zur chromatographischen Auftrennung von Enantiomerengemischen eingesetzt werden können.

Die Aufgabe der vorliegenden Erfindung ist die Bereitstellung von vernetzten Polystyrol-Perlpolymeristen, welche mit Siliziumdioxid gefüllt sind, als Ausgangsmaterial für Ionenaustauscher, Katalysatoren, Adsorber und Chromatographieharze.

Gegenstand der vorliegenden Erfindung und Lösung der Aufgabe ist ein Verfahren zur Herstellung eines siliziumdioxidhaltigen Perlpolymerisats, das dadurch gekennzeichnet ist, dass man
I) ein Gemisch aus
   a) Styrol
   b) Vernetzer
   c) feinteiligem oberflächenmodifizierten Siliziuimdioxid und
   d) Radikalstarter
   erzeugt, und
II) das erhaltene Gemisch in wässriger Phase bei erhöhter Temperatur zu einem Perlpolymerisat aushärtet.
Gegebenenfalls kann dem Gemisch I) noch ein Inertmittel zugegeben werden.

Unter Styrol (a) im Sinne der vorliegenden Erfindung werden neben nicht substituietem Styrol auch substiuierte Styrole, wie z.B. Vinylnaphthalin, Vinyltoluol, Ethylstyrol, α-Methylstyrol und Chlorstyrole verstanden.

Vernetzer (b) sind Verbindungen, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthalin, Trivinylnaphthalin, Diethylenglycoldivinylether, Octadien-1,7, Hexadien-1,5, Diethylenglycoldivinylether und Butandioldivinylether.

Der Anteil an Vernetzer beträgt im Allgemeinen 1 bis 50 Gew%, bevorzugt 2 bis 16 Gew.% bezogen auf die Summe der Komponenten (a) und (b).

Feinteiliges Siliziumdioxid (c) im Sinne der Erfindung ist Quarzmehl und amorphes Siliziumdioxid, desweiteren fein gemahlene Gläser und Glaskeramiken. Besonders bevorzugt ist flammhydrolytisch gewonnenes, mikrofeines Siliziumdioxid, das z. B. unter der Bezeichnung Aerosil® oder HDK® (Hochdisperse Kieselsäure) als Handelsprodukt erhältlich ist.

Besonders gut geeignet ist flammhydrolytisch gewonnenes Siliziumdioxid mit einer mittleren Teilchengröße (Primärteilchengröße) von 10 bis 40 nm und einer BET-Oberfläche von 20 bis 300, vorzugsweise 40 bis 200 m²/g.

Der Füllstoff auf Siliziumdioxidbasis wird vor seiner Verwendung zur Herstellung der erfindungsmäßigen Perlen oberflächenbehandelt. Geeignete Oberflächenbehandlungsmittel sind in erster Linie die als Haftvermittler bekannten Verbindungen. Besonders gut geeignet sind Silanverbindungen, die beispielsweise in den US-A 30 66 113 oder US-A 35 39 533 beschrieben werden. Erfindungsgemäß können sowohl gesättigte Silanverbindungen, wie beispielsweise Trimethylchlorsilan, Hexamethyldisilazan oder γ-Glycidoxypropyltrimethoxysilan, als auch ungesättigte Silanverbindungen angewendet werden.

Als ungesättigte, polymerisierbare Silanverbindungen seien beispielhaft genannt: Vinyltriethoxysilan, Vinyltrimethoxysilan, γ-Methacryloxypropyltrimethoxysilan, γ-Methacryloxypropyl-tris(2-methoxyethoxy)-silan und Vinyltriacetoxysilan.

Die Silanverbindung soll in Anteilen von 1 bis 25 Gew.-%, vorzugsweise von 5 bis 20 Gew.-%, bezogen auf den Füllstoff auf Siliziumdioxidbasis, angewendet werden. Die Oberflächenbehandlung wird im allgemeinen in einem inerten Lösungsmittel, beispielsweise in Methylenchlorid oder Toluol, durchgeführt, doch ist es in manchen Fällen, zum Beispiel bei der Nachbehandlung mit Hexamethyldisilazan, auch möglich, auf ein Lösungsmittel zu verzichten.

Die Menge des oberflächenmodifizierten Füllstoffs beträgt 0,1 - 70 Gew.-%, bevorzugt 1 - 50 Gew.-%, besonders bevorzugt 2 - 30 Gew.-%, bezogen auf die Komponenten a, b und c.

Die Mischung aus oberflächenmodifiziertem Siliziumdioxid und den Komponenten (a) und (b) kann in üblichen Rührapparaturen hergestellt werden. Es sollen dabei vorzugsweise hohe Scherkräfte, zum Beispiel Rührenergien von 1 bis 10 Watt/l, angewendet werden. Auch ein Schnellrührer oder Rotorstatormischer ist gut geeignet. Besonders vorteilhaft ist eine gegebenenfalls zusätzliche Behandlung mit Ultraschall.

Während des Mischvorgangs oder nach Abschluss des Mischens wird vorzugsweise unter Rühren ein Vakuum von 0,01 bis 500 Torr, besonders bevorzugt von 1 bis 300 Torr, angelegt. Die Vakuumbehandlung, die mindestens einige Minuten, beispielsweise mindestens 10 Minuten, stattfinden soll, erfolgt vorzugsweise bei Raumtemperatur, doch können auch höhere oder niedrigere Temperaturen angewendet werden. Es ist dabei von Vorteil, wenn beim Evakuieren ein geringer Bruchteil der eingesetzten Monomeren (0,01 bis 5 %) abdestilliert wird, da auf diese Weise Wasserspuren aus den Monomeren und von der Siliziumdioxidoberfläche entfernt werden können. Zweckmäßigerweise wird die Füllstoff-Monomermischung mit Inertgas, zum Beispiel Stickstoff, belüftet.

Zur Aktivierung können übliche monomerlösliche Radikalstarter (d) verwendet werden; beispielhaft seien genannt: Peroxid- und Azoverbindungen, wie Dibenzoylperoxid, Dilauroylperoxid, Cyclohexylpercarbonat und Azoisobuttersäuredinitril. Gut geeignet sind auch Mischungen von Polymerisationsinitiatoren mit unterschiedlichen Zerfallstemperaturen. Die Zugabe des Radikalstarters kann vor oder nach dem Evakuierungsschritt erfolgen. Um vorzeitiges Anpolymerisieren zu vermeiden, ist es jedoch zweckmäßig, die Radikalstarter erst unmittelbar vor dem Dispergieren zuzusetzen. Die Radikalstarter werden in einer Menge von 0,05 - 2 Gew.-%, vorzugsweise 0,1 bis 0,8, bezogen auf die Komponenten (a) und (b), eingesetzt.

Die gegebenenfalls zur Mischung I) zuzugebenden Inertmittel (e) sind mit Wasser nicht mischbare, organische Flüssigkeiten. Bevorzugt genannt seien aliphatische oder aromatische Kohlenwasserstoffe und Alkohole mit bis zu 20 C-Atomen, wie Hexan, Heptan, Isodecan, Benzol, Toluol oder Oktanol, Halogenkohlenwasserstoffe, wie Di-, Tri-, Tetrachlormethan oder 1,2-Dichlorethan, Ester, wie Essigsäuremethylester, Essigsäurebutylester oder Dialkylcarbonate und nicht wasserlösliche Ketone, wie Methylisobutylketon oder Cyclohexanon.

Das Gewichtsverhältnis von Inertmittel zu den Komponenten (a) und (b) beträgt 0,1 : 1 bis 3 : 1, vorzugsweise 0,5 : 1 bis 2 : 1.

Das aktivierte Siliziumdioxid-Monomer-Gemisch wird in II) zunächst mittels einer Wasserphase dispergiert. Um möglichst gleichmäßige Perlen zu erzeugen, ist es vorteilhaft, die Wasserphase vorzulegen und das Füllstoff-Monomergemisch langsam unter Rühren zuzusetzen.

Das Verhältnis von Monomerphase zur Wasserphase beträgt 1 : 1 bis 1 : 10, vorzugsweise 1 : 1,5 bis 1 : 4.

Bevorzugt enthält die Wasserphase ein Dispergiermittel. Als Dispergiermittel sind alle zu diesem Zweck bekannten wasserlöslichen makromolekularen Verbindungen, z. B. Cellulosederivate, wie Methylcellulose und teilverseifte Polyvinylacetate geeignet. Gut geeignet sind auch Copolymerisate aus (Meth)acrylsäure und (Meth)acrylsäurealkylester. Beispielhaft genannt sei die alkalische Lösung eines Copolymerisates aus Methacrylsäure und Methylmethacrylat. Der Gehalt an Dispergiermittel soll vorzugsweise 0,5 bis 5 Gew.-%, bezogen auf die Wasserphase, betragen.

Die Polymerisation wird durch Erhitzen des Gemisches in wässriger Phase auf die Zerfallstemperatur des Polymerisationsinitiators eingeleitet. Die Reaktion soll so geführt werden, dass die Monomeren nicht zum Sieden kommen. Bei einsetzender exothermer Reaktion muss gegebenenfalls gekühlt werden. Es ist vorteilhaft, die Polymerisation unter erhöhtem Druck, beispielsweise unter 2 bis 6 bar Stickstoffdruck, durchzuführen.

Aus der auspolymerisierten Dispersion kann auf bekannte Weise durch Dekantieren, Filtrieren, Waschen und Trocknen das Perlpolymerisat gewonnen werden.

Gegenstand der vorliegenden Erfindung sind aber auch siliziumdioxidhaltige Perlpolymerisate, erhältlich durch
I) Mischen von
   a) Styrol
   b) Vernetzer
   c) feinteiligem oberflächenmodifiziertem Siliziuimdioxid und
   d) Radikalstarter
   und
III) Aushärten des erhaltenen Gemisches in wässriger Phase bei erhöhter Temperatur zu einem Perlpolymerisat. In einer bevorzugten Ausführungsform kann der Mischung zu I) noch Inertmittel zugegeben werden.

Die erfindungsgemäßen siliziumdioxidhaltigen Perlpolymerisate eignen sich in hervorragender Weise als Ausgangsmaterialien für Ionenaustauscher, Chelatharze, Chromatographieharze, Katalysatoren oder Adsorberharze. Die daraus hergestellten Endprodukte weisen eine entscheidend verbesserte mechanische Festigkeit auf.

### Beispiele

### Beispiel 1

### Silanisierung von Siliziumdioxid

In einem 8 Liter-Rührkessel werden
4 Liter Aceton
37,5 g *γ*-Methacryloxypropyltrimethoxysilan
0,5 g Dicyclohexylamin
10 g destilliertes Wasser
vorgelegt. Unter Rühren werden 462,5 g Siliziumdioxid (mittlere Teilchengröße 30 mµ, BET-Oberfläche 120 m²/g) zugegeben und 2 Stunden unter Rückfluss gerührt. Anschließend wird das Aceton abdestilliert. Der Rückstand wird 15 Stunden bei 60°C und anschließend weitere 6 Stunden bei 90°C getrocknet. Kohlenstoffgehalt des Produkts: 2,2 %.

### Beispiel 2

### Silanisierung von Siliziumdioxid

In einem Rührkessel werden 1500 g Siliziumdioxid (Aerosil® OX 50 der Firma Degussa) gegeben und unter starkem Rühren 265 g Hexamethyldisilazan langsam zugetropft. Anschließend wird so lange unter schwachem Vakuum gerührt, bis kein Ammoniak nachweisbar ist.
Kohlenstoffgehalt: 0,95 %

### Beispiel 3

### Herstellung eines siliziumdioxidhaltigen Perlpolymerisates

In einen 4 Liter-Planschliffreaktor mit Gitterrührer, Kühler, Temperaturfühler sowie Thermostat und Schreiber wird eine wässrige Lösung aus 2,1 g Methylhydroxyethylcellulose, 4,76 g Dinatriumhydrogenphosphat und 1850 g entionisiertes Wasser vorgelegt.

In einem separaten Rührgefäss werden 926,7 g Styrol und 24,58 g Divinylbenzol (81,4 %ig) gemischt. In die erhaltene Mischung werden 50 g Siliziumdioxid aus Beispiel 1 portionsweise zugesetzt und 4 min. bei 24.000 U/min. mit einem Rotor-Stator-Mischer dispergiert. Danach wird für 10 Minuten ein Vakuuum von 250 Torr angelegt und mit Stickstoff belüftet. Anschließend werden 5,7 g Dibenzoylperoxid zugegeben und binnen 15 min. in der erhaltenen Dispersion gelöst.

Die aktivierte Dispersion wird durch einen verlängerten Trichter unter Rühren mit 320 Umdrehungen/min. in den vorbereiteten 4 Liter-Planschliffreaktor bei 55°C unter die Oberfläche der wässrige Phase eingetragen. Nun wird auf 63°C aufgeheizt, wobei in den ersten 15 min. ein Stickstoffstrom von 20 Liter/min. übergeleitet wird. Es wird 6 h bei 63°C erwärmt, dann innerhalb einer Stunde die Temperatur auf 95°C erhöht und noch 2 h bei 95°C gehalten. Nach dem Abkühlen wird das Polymerisat über einem 100 µm - Sieb mit viel Wasser gewaschen, dann bei 80°C getrocknet. Man erhält 920 g regelmäßiger Perlen mit der durchschnittlichen Korngröße von 460 µm. Der Siliziumdioxidgehalt beträgt 5,1 Gew.-%.

### Beispiel 4

### Herstellung eines siliziumdioxidhaltigen Perlpolymerisates

Beispiel 3 wird wiederholt, wobei 75g silanisiertes Siliziumdioxid aus Beispiel 2 eingesetzt wird. Man erhält 945 g regelmäßiger Perlen mit der durchschnittlichen Korngröße von 490 µm und einem Siliziumdioxidgehalt von 7,35 %.

## Patentansprüche

1. Verfahren zur Herstellung eines siliziumdioxidhaltigen Perlpolymerisats, **dadurch gekennzeichnet, dass** man
I) ein Gemisch aus
a) Styrol
b) Vernetzer
c) feinteiligem oberflächenmodifiziertem Siliziuimdioxid und
d) Radikalstarter
erzeugt und
II) das erhaltene Gemisch in wässriger Phase bei erhöhter Temperatur zu einem Perlpolymerisat aushärtet.

2. Verfahren gemäß Anspruch 1, **dadurch gekennzeichnet, dass** dem Gemisch zu I) zusätzlich Inertmittel zugegeben wird.

3. Verfahren nach Anspruch 1 oder 2, **dadurch gekennzeichnet ist, dass** das Siliziumdioxid mit einer Silanverbindung oberflächenmodifiziert ist.

4. Siliziumdioxidhaltige Perlpolymerisate, erhältlich durch
I) Mischen von
a) Styrol
b) Vernetzer
c) feinteiligem oberflächenmodifiziertem Siliziuimdioxid und
d) Radikalstarter
und
II) Aushärten des erhaltenen Gemisches in wässriger Phase bei erhöhter Temperatur zu einem Perlpolymerisat.

5. Siliziumdioxidhaltige Perlpolymerisate gemäß Anspruch 4, **dadurch gekennzeichnet, dass** der Mischung zu I) zusätzlich Inertmittel zugegeben wird.

6. Siliziumdioxidhaltige Perlpolymerisate gemäß der Ansprüche 4 und 5, **dadurch gekennzeichnet, dass** das Siliziumdioxid mit einer Silanverbindung oberflächenmodifiziert ist.

7. Verwendung der siliziumdioxidhaltigen Perlpolymerisate nach einem der Ansprüche 4 bis 6 zur Herstellung von Ionenaustauschern, Chelatharzen, Chromatographieharzen, Katalysatoren oder Adsorberharzen.
